(19) **Europäisches Patentamt**

**European Patent Office**

**Office européen des brevets**

(11) **EP 1 082 868 B1**

(12) **EUROPEAN PATENT SPECIFICATION**

(45) Date of publication and mention
of the grant of the patent:
**21.06.2006 Bulletin 2006/25**

(51) Int Cl.:
*H04Q 7/38* (2006.01)      *G01S 5/14* (2006.01)
*G01S 3/02* (2006.01)

(21) Application number: **99922209.4**

(22) Date of filing: **03.05.1999**

(86) International application number:
**PCT/FI1999/000366**

(87) International publication number:
**WO 1999/057932 (11.11.1999 Gazette 1999/45)**

(54) **METHOD OF MEASURING SIGNAL TIMING, AND RADIO SYSTEM**

VERFAHREN ZUM MESSEN DER SIGNALZEITEINSTELLUNG SOWIE FUNKSYSTEM

PROCEDE DE MESURE DE LA SYNCHRONISATION D'UN SIGNAL, ET SYSTEME RADIO

(84) Designated Contracting States:
**AT BE CH DE FI FR GB IT LI NL SE**

(30) Priority: **04.05.1998 FI 980982**

(43) Date of publication of application:
**14.03.2001 Bulletin 2001/11**

(73) Proprietor: **Nokia Corporation**
**02150 Espoo (FI)**

(72) Inventors:
• **KÄRNÄ, Juha**
**FIN-02200 Espoo (FI)**
• **HOTTINEN, Ari**
**FIN-02320 Espoo (FI)**

• **HELENIUS, Jyri**
**FIN-02600 Espoo (FI)**

(74) Representative: **Karppinen, Olavi Arto et al**
**Kolster Oy Ab,**
**P.O. Box 148,**
**Iso Roobertinkatu 23**
**00121 Helsinki (FI)**

(56) References cited:
**EP-A2- 0 852 430**       **WO-A1-94/28643**
**WO-A1-96/35958**        **WO-A1-97/41652**
**WO-A1-99/23847**        **WO-A2-99/01000**
**US-A- 5 614 914**       **US-A- 5 675 344**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 082 868 B1

## Description

FIELD OF INVENTION

The field of the invention are radio systems and, more particularly, a CDMA radio system. The invention relates to a method of measuring signal timing to be used in the CDMA radio system comprising at least three base stations and a terminal, which multiply a signal by a spreading code, and in which method the transmission of a base station comprises various code channels transmitted by different spreading codes, on one of which code channels a predetermined symbol sequence is transmitted, and in which method the terminal is in connection with at least one base station, on whose timing the terminal stores data.

The invention also relates to a radio system, which is a CDMA radio system in particular, comprising at least three base stations and a terminal which are arranged to multiply a signal by a spreading code, in which radio system the transmission of a base station comprises various code channels transmitted by different spreading codes, at least one of which code channels comprises a predetermined symbol sequence, and the terminal is in connection with at least one serving base station, on whose timing the terminal stores data.

BACKGROUND OF THE INVENTION

It is important to determine the precise propagation time delay for a received signal in order to detect the signal and to locate a terminal, for example. In order for the terminal to synchronize itself to the transmission of a base station, each base station transmits a synchronizing signal on a sync channel. The signal on the sync channel can be demodulated and detected each time when a pilot signal is identifiable. On the sync channel, data on the base station, the power and phase of the pilot signal and the amount of uplink interference is transferred. Detecting symbols on a traffic channel is possible when the connection between a transmitter and a receiver is synchronized. The synchronized connection for its part means that the terminal is aware of the propagation time delay for the signal.

In prior art solutions, code channels whose direction of transmission is from a base station to a subscriber station, e.g. pilot channels, can be used for synchronizing. The subscriber station can seek the code phase and then synchronize itself to the transmission of the base station and thus determine the signal timing of the base station. In the reverse direction of transmission from a subscriber station to a base station, the subscriber station begins transmitting and the base station seeks the code phase and determines the signal timing of the terminal. In the direction of transmission from a subscriber station to a base station, a problem arises which is due to the distance between a subscriber station and a base station, i.e. a near-far problem. In locating a terminal, this problem is called a coverage problem. A terminal located close to one base station is outside coverage areas of other base stations and it is not capable of hearing other base stations because of the interfering transmission of the nearby base station. As the travel time of a signal between the terminal and at least three base stations cannot be measured, the location of the terminal cannot thus be determined either.

The prior art includes also patent publication US 5675344 presenting a method and an apparatus for locating a mobile station in a spread spectrum communication system.

BRIEF DESCRIPTION OF THE INVENTION

It is thus an object of the invention to provide a method and an apparatus implementing the method, in such a way that the above problems can be eliminated. This is achieved by a type of method disclosed in the introduction, which is characterized by conveying data on at least one code channel transmitted by at least one neighbour base station to a serving base station via the fixed network part, transmitting the data on at least one code channel from the serving base station to the terminal, the terminal determining on the basis of said data the spreading code of at least one code channel and an estimate of the symbol timing of each code channel in respect of the timing of the serving base station, and the terminal utilizing on the basis of these data on code channels at least some of the code channels of the neighbour base station to measure the signal timing of the neighbour base station.

The system of the invention is characterized in that the fixed network part is arranged to convey data on at least one code channel transmitted by at least one neighbour base station to the serving base station, the serving base station is arranged to transmit the data on at least one code channel to the terminal, the terminal is arranged to determine on the basis of said data at least the spreading code of at least one said code channel and an estimate of the symbol timing of each code channel in respect of the timing of the serving base station, and on the basis of data on code channels the terminal is arranged to utilize at least some of the code channels of the neighbour base station to measure the signal timing of the neighbour base station.

The method and system of the invention provide a plurality of advantages. Coverage is improved and a terminal can also synchronize itself to the transmission of neighbour base stations, which enables the locating of the terminal.

BRIEF DESCRIPTION OF THE DRAWINGS

The invention will now be described in greater detail in connection with the preferred embodiments, with reference to the attached drawings, in which

Figure 1 shows a radio system,
Figure 2 shows traffic channels,
Figure 3 shows a block diagram of a receiver and
Figure 4 shows a block diagram of a RAKE receiver.

DETAILED DESCRIPTION OF THE INVENTION

The solution of the invention is applicable to a WCDMA radio system (Wideband Code Division Multiple Access) in particular, yet without restricting thereto.

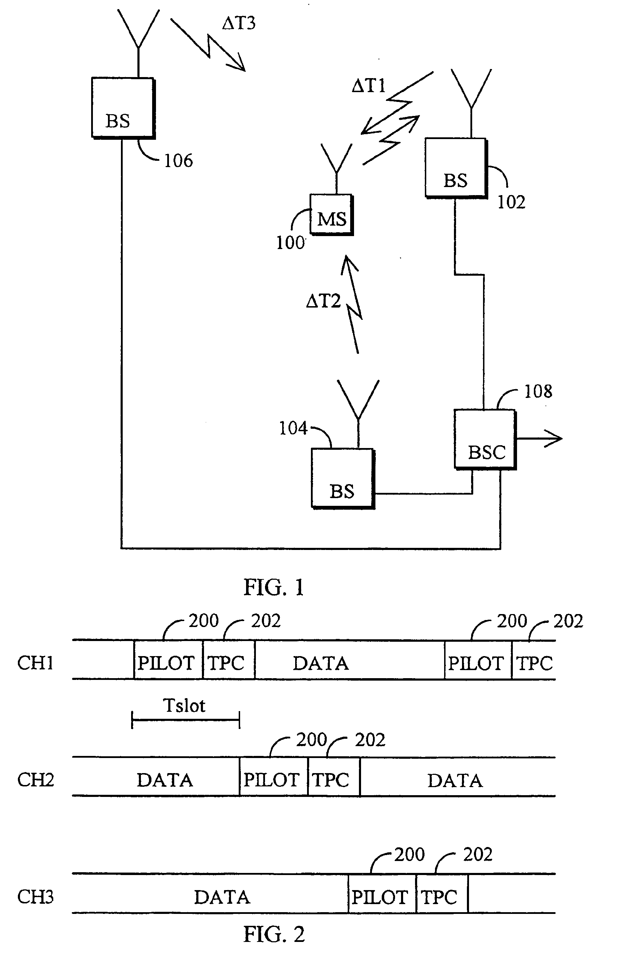

Figure 1 shows a radio system comprising a terminal 100, three base stations 102 to 106 and a base station controller 108. In this case, the terminal 100, which is preferably a mobile phone, can be considered primarily being in connection with the base station 102. Neighbour base stations of the base station 102 are the base stations 104 and 106. All these base stations 102 to 106 share preferably the same base station controller 108, from which there is a further connection via e.g. a mobile services switching centre (not shown in Figure 1) to the other parts of the mobile telephone network and to other telephone networks. All the other parts of the radio system except the terminals 100 are defined as the network part of the radio system.

To measure the terminal location, the travel time of a signal between the terminal and at least three base stations is needed. At first, the terminal measures the time of arrival, TOA, of a signal transmitted by each base station. Time differences between the signals of the base stations TDOA (Time Difference Of Arrival) or OTD (Observed Time Difference) can be detected by calculating the differentials of the times of arrival TOA of the base stations, when the time differences also indicate the distances between the base stations and the terminal. When the distances between the terminal and at least three base stations is known, the terminal location can be determined unambiguously. In the CDMA system, the time of arrival can be determined by utilizing the synchronization of the spreading code. When a given chip of the spreading code (a chip is a bit of the spreading code) at the terminal appears at the instant t1 and the same chip at the base station appears at the instant t2, the travel time of the signal between the terminal and the base station is t2 - t1. The terminal measures the time t1 and the base station measures the time t2. In the solution of the invention, the terminal clock need not be synchronized with the clocks of the base stations. When the terminal transmits a so-called round-trip signal to the base station and the base station replies to this signal, the effect of the time difference between the terminal and the base station can be eliminated. If the transmission of the base stations has not been synchronized and the time differences between the base stations are not known, the round-trip must be measured from all the base stations whose signal timing the terminal measures. In a synchronized network, or if the time differences between the base stations are known, a round-trip signal is not needed for employing the TDOA method based on the time differences to determine a location. In the TOA method based on propagation time delays, a round-trip signal is only needed for the serving base station.

Even if the network was synchronized or the timing differences between the base stations were known, the round-trip signal to the serving base station can be used in determining the range for the propagation time delay to the other base stations. The terminal first measures the distance to the serving base station by using the round-trip signal. If the distance to the serving base station is d1, then the distance between the neighbour base station and the terminal is:

$$d12 - d1 - e \leq d2 \leq d12 + d1 + e$$

where d12 is the distance between the serving base station and the neighbour base station and e is the accuracy of the measurement d1. The range of the delay established this way can be utilized in estimating the propagation time delay. The range deviation of the distance between the terminal and the neighbour base station is 2(d1 + e), which corresponds to 2(d1 + e)/(c*Tc) as chips, where Tc is the duration of the chip and c is the velocity of electromagnetic radiation.

In the solution of the invention, the terminal 100 is at first in connection with at least one base station (in Figure 1, with the base station 102). At request of the terminal 100 or the network part of the radio system, the neighbour base stations 104, 106 of the base station 102 serving the terminal 100 transmit to the terminal 100 data on the transmitted code channels, an example of which is a traffic channel in particular. On the basis of the received data, the terminal 100 can also utilize some other than the sync channel in synchronizing, whereby it is possible to measure the signal timing of the neighbour base stations 104, 106 on higher interference and noise levels than in the solutions solely based on the use of the sync channel, because also the energy of a signal of other than the sync channel can be used. It is especially preferable to utilize the parts of the code channels in which a known signal is transmitted, e.g. regularly transmitted reference i.e. pilot symbols. Thus, data modulation can be eliminated from these parts without decision feedback, and a so-called coherent averaging or filtering can be used for the measured estimate of the impulse response of the channel. Let us now turn to the solution of the invention in case of using pilot symbols of the code channel.

An example of the content of the code channels transmitted by a base station is shown as a function of time in Figure 2. In this example, predetermined pilot symbols 200 are transmitted on three different traffic channels CH1, CH2 and CH3 at different instances. In order to be capable of making use of the pilot symbols 200, the terminal has to be aware of the time difference Tslot between the pilot symbols of the code channel in respect of the timing of the serving base station. On the traffic channel, besides data 204 also a transmission power symbol TPC (Transmission Power Control) is transmitted, by means of which symbol the base station can request the terminal to change its transmission power.

In order to make use of the signals of the code channel, the terminal 100 has to have data both on the time difference Tslot between the pilot symbols 200 and on the spreading code, spreading coefficient and reference symbols of the code channel. The terminal 100 needs further an estimate of the phase of the spreading code and of the location of the reference symbols in a timeslot, which data the base station 102 serving the terminal 100, the base station controller 108 or some other unit in the fixed network part requests of the neighbour base station 104, 106. The neighbour base station 104, 106 transmits these data to the serving base station 102 preferably via the fixed network part from at least one of its code channels, which has/have the highest transmission power in the direction of the base station 102 serving the terminal. The base station 102 serving the terminal 100 transmits these data further to the terminal 100. Data on the signal timing are given to the terminal 100 preferably in respect of the timing of the serving base station 102. If the neighbour base station 104, 106 does not transmit a sufficient amount of code channels for the timing measurement to succeed, e.g. due to low congestion, the neighbour base station 104, 106 can add more channels to the transmission for the time the terminal 100 is measuring the channels. This can also happen at request of the terminal 100. It is the signal timing of these channels that is used in the inventive solution to locate the terminal 100. On these channels used particularly in locating the terminal 100, known reference symbols are preferably transmitted. When a radio system is only slightly congested, more channels can be added without substantially disturbing data transmission of other terminals. All the timings that are conveyed by the fixed network are preferably in respect of the timing of the serving base station 102.

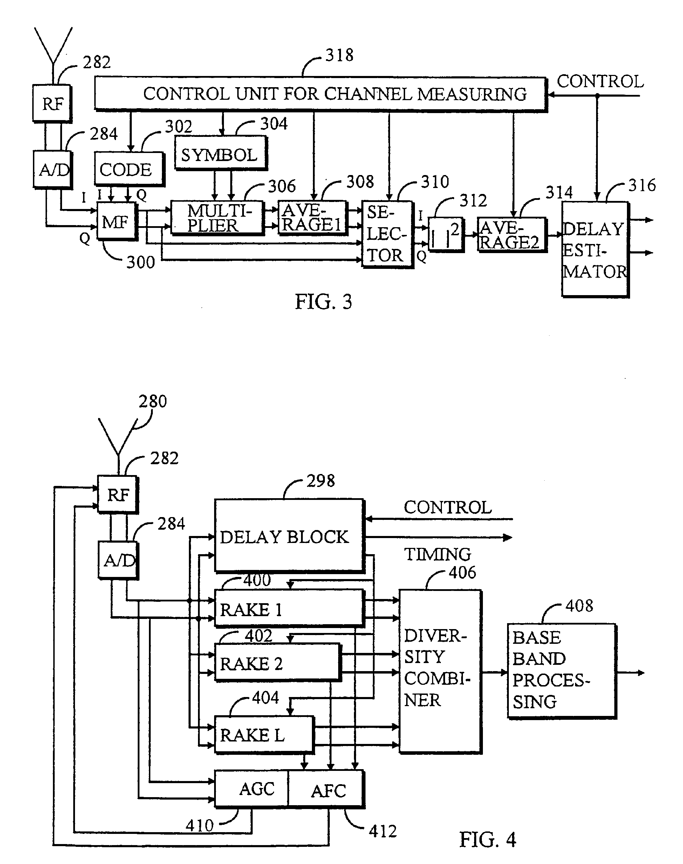

Let us now take a closer look on a receiver of the terminal in Figure 3 applicable to the solution of the invention. The receiver comprises firstly an antenna 280, radio frequency parts 282 and an analogue-to-digital converter 284. A transmitted signal is received by the antenna 280, from which the signal travels to the radio frequency parts 282 where a quadrature demodulation is performed. In quadrature demodulation, the received signal is divided into two parts, the first of which is multiplied by a radio-frequency cosine carrier wave, which has the form $\cos(\omega_c t)$. The second part of the signal is multiplied by a phase-shifted carrier wave, which can be expressed such that the signal is multiplied by a sin carrier wave, which has the form $\sin(\omega_c t)$. Thus, the multiplication of signals employs carrier waves, between which there is a $\pi/2$ phase shift. As the different parts of the signal are orthogonal to each other due to the $\pi/2$ phase shift, data parts can be expressed in a complex manner. Thus, the received signal U can be expressed in the form $U = I + jQ$, where I is the first data part, Q is the second data part and j is an imaginary unit. The quadrature-demodulated signal parts I, Q are changed in the analogue-to-digital converter 284 to complex digital samples.

A filter 300 arranged to the code of the received signal is a FIR filter (Finite Impulse Response), whose weight coefficients are directly derived from the spreading code of the used signal. The arranged filter 300 outputs the correlation of each signal received per each signal sample by means of one delay to be measured along with the spreading code, which is loaded to the arranged filter 300 from a code generator 302. The arranged filter 300 comprises N taps, which corresponds to the delay area to be measured. As N signal samples have been driven through the arranged filter 300, the weight coefficients remaining unchanged, N correlation values have developed, preliminarily indicating an estimate of the impulse response of the channel in vector format. From the preliminary estimate of the impulse response, the effect of data modulation in a multiplier 306 is eliminated, in which multiplier the preliminary estimate of the impulse response is multiplied by a predetermined symbol sequence derived from a symbol generator 304. Thus, the estimate of the impulse response is made, and its biggest values generate delay estimations for multipath components of the signal. As the amount of noise in the signal is very high, before generating delay estimations, a series of consecutive estimates of the impulse response has to be filtered in calculating means 308 in order to establish reliable delay estimations. This is accomplished by loading the weight coefficients of the arranged filter 300 to the next N samples of the spreading code and by averaging the N-long impulse response established this way with the previous estimates of the impulse response. After the coherent averaging according to the invention is performed for the estimates of the impulse response, the delay estimations for the received signal can in principle be made. In the described receiver solution, delay estimations are, however, still specified by further processing. It is to be noticed that although the term coherent averaging is in this description connected to the estimates of the impulse response, any known filtering of the estimates of the impulse response, e.g. an IIR-based filtering (Infinite Impulse Response), can be used instead of the averaging in the receiver implementing the inventive solution. If several code channels are used for measuring timing, their known symbol sequences can be utilized by loading to the arranged filter at each instant of time the coefficients corresponding to the spreading code of the code channel by which spreading code reference symbols are received at that moment. If there is a sufficient amount of code channels in use and their time differences Tslot span the whole transmission period of the reference symbols, the terminal can after the arranged filter constantly use a signal from which data modulation can be eliminated. The estimates of the impulse response generated in this manner can be coherently averaged, providing that the code channels to be used in measuring timing are transmitted from the same antenna of the base station, whereby they proceed along the same radio channel.

A complex IQ signal proceeds coherently from the averaging calculating means 308 to selecting means 310, at which also an output signal of the arranged filter 300 directly arrives. The selecting means 310 can thus be used for deciding, whether or not to utilize the coherent averaging. Irrespective of the fact, whether to directly select the output signal of the filter 300 or to use the coherently averaged signal components, the signal in IQ format is squared ($1^2+Q^2$) in means 312 before the averaging in means 314 to eliminate data modulation and phase error. As data modulation, e.g. a QPSK modulation (Quadrature Phase Shift Keying) is employed. The averaging which is performed after the selector 310 is called incoherent averaging. Employing only incoherent averaging according to the prior art has the disadvantage that besides the signal, also the noise in the output of the arranged filter 300 is squared, and thus the signal-to-noise ratio does not substantially improve after the averaging. A mere incoherent averaging helps, however, to estimate the peaks more reliably. In coherent averaging, the squaring is performed only after the coherent averaging. This requires, however, that the transmitted symbols, preferably pilot symbols, are predetermined, whereby data modulation can be eliminated from the samples.

In practice, a frequency error between the transmitter and oscillators (not shown in the figures) in the radio frequency means 282 of the receiver and the Doppler shift in the signal caused by a radio channel create phase rotating of signal samples, and so the coherent averaging time cannot be very long, e.g. about 1 ms maximum. In this case, a coherently averaged estimate of the impulse response can be squared and further averaged incoherently at a longer period of time (more than 1 ms) in the means 314. As the estimate of the impulse response proceeds to a delay estimator 316, the delay estimator 316 seeks the peaks of the estimate of the impulse response representing the most important delays of the multipath-propagated signal. The shortest delay often corresponds to the time the signal has taken to travel the direct line of sight distance. In this way, the terminal can measure the time of arrival TOA (Time Of Arrival) of the signals of the base stations and the observed time difference OTD (Observed Time Difference) between the signals. The receiver is controlled by a control unit 318 and blocks 300 to 318 form a delay block 298, which can be a part of a RAKE receiver.

Figure 4 shows a block diagram of a RAKE receiver. The received signal travels from the antenna 280 through the radio frequency means 282 and the analogue-to-digital converter 284 as in Figure 3. Thereafter, a complex signal travels to the delay block 298, which is illustrated in more detail in Figure 3, and to RAKE branches 400 to 404 of the RAKE receiver. The blocks 400 to 404 typically comprise a code generator and an arranged filter to decode the spreading code, and each block 400 to 404 is arranged to edit the spreading-coded signal received at different delays. The delay block 298 sets the delays of the RAKE branches 400 to 404, by which the spreading coding is decoded. After the spreading codings of the signals received by the RAKE branches 400 to 404 have been decoded, different signal components of the multipath-propagated signal are combined in a diversity combiner 406, after which the baseband processing of the signal is continued, but the further processing is not substantial for the inventive solution. In the receiver, the amplification and frequency of the radio frequency means 282 is preferably adjusted by means of automatic gain control means 410 and by means of automatic frequency control means 412.

When it comes to digital signal manipulation in particular, the solutions of the invention can be implemented by e.g. ASIC or VLSI circuits (Application-Specific Integrated Circuit, Very Large Scale Integration). The procedures to be performed are preferably implemented as programs based on microprocessor technology.

## Claims

1.  A method of measuring signal timing to be used in the CDMA radio system comprising at least three base stations (102 to 106) and a terminal (100), which multiply a signal by a spreading code, and in which method the transmission of a base station comprises various code channels (CH1 to CH3) transmitted by different spreading codes, on one of which code channels a predetermined symbol sequence (200) is transmitted, and in which method the terminal (100) is in connection with at least one base station (102), on whose timing the terminal (100) stores data, **characterized by**

    conveying data on at least one code channel (CH1, CH2, CH3) transmitted by at least one neighbour base station (104, 106) to a serving base station (102) via the fixed network part,
    transmitting the data on at least one code channel (CH1, CH2, CH3) from the serving base station (102) to the terminal (100),

the terminal (100) determining on the basis of said data the spreading code of at least one code channel (CH1, CH2, CH3) and an estimate of the symbol timing of each code channel (CH1, CH2, CH3) in respect of the timing of the serving base station (102), and

the terminal (100) utilizing on the basis of these data on code channels at least some of the code channels (CH1, CH2, CH3) of the neighbour base station (104, 106) to measure the signal timing of the neighbour base station (104, 106).

2. A method as claimed in claim 1, **characterized by** the terminal (100) utilizing at least some of the predetermined symbol sequences (200) transmitted on the code channels (CH1, CH2, CH3) by the neighbour base station (104, 106) to measure the signal timing of the neighbour base station (104, 106).

3. A method as claimed in claim 1, **characterized by** the base station (102) serving the terminal (100), a base station controller (108) or some other unit in the fixed network requesting data on the code channels of at least one neighbour base station (104, 106) via the fixed network part.

4. A method as claimed in claim 1, **characterized by** the neighbour base station (104, 106) selecting for data transmission code channels (CH1 to CH3) which have the highest transmission power in the direction of the base station (102) serving the terminal (100).

5. A method as claimed in claim 1, **characterized by** the timing measurement also utilizing the sync channel.

6. A method as claimed in claim 1, **characterized by** the terminal (100) measuring the signal timing from at least three base stations (102 to 106) to locate the terminal (100).

7. A method as claimed in claim 6, **characterized by** the terminal (100) transmitting data on the signal timing of the base stations to the fixed network part of the radio system to locate the terminal (100).

8. A method as claimed in claim 6, **characterized by** the terminal (100) determining its own location by means of the signal timing.

9. A method as claimed in claim 1, **characterized by** the terminal (100) measuring the signal timing with some other neighbour base station (104, 106), if the signal timing fails with one neighbour base station (104,106).

10. A method as claimed in claim 1, **characterized by** the neighbour base station (104, 106) adding to its transmission at least one code channel (CH1, CH2, CH3) on which a known symbol sequence is transmitted to measure the signal timing of the terminal (100), and the neighbour base station (104, 106) conveying via the serving base station (102) to the terminal (100) data, on the basis of which the terminal (100) uses said code channel (CH1, CH2, CH3) to measure the signal timing.

11. A method as claimed in claim 2, **characterized by** the terminal (100) receiving predetermined symbols (200) on several code channels (CH1 to CH3) of the same base station (102 to 106), the symbols being transmitted time-division multiplexed by the base station (102 to 106) on several channels (CH1 to CH3) in such a way that the predetermined symbols (200) of different code channels arrive at substantially different times.

12. A method as claimed in claim 2, **characterized by** the terminal (100) decoding the received spreading coding of the signal of the code channel, multiplying the signal by a predetermined symbol sequence (200) to generate an estimate of the impulse response of the channel and measuring the timing of the received signal by coherently averaging the estimates of the impulse response.

13. A radio system, which is a CDMA radio system, comprising at least three base stations (102 to 104) and a terminal (100) which are arranged to multiply a signal by a spreading code, in which radio system the transmission of a base station comprises various code channels (CH to CH3) transmitted by different spreading codes, at least one of which code channels comprises a predetermined symbol sequence (200), and the terminal (100) is in connection with at least one serving base station (102), on whose timing the terminal (100) stores data, **characterized in that** the fixed network part is arranged to convey data on at least one code channel (CH1, CH2, CH3) transmitted by at least one neighbour base station (104, 106) to the serving base station (102),

the serving base station (102) is arranged to transmit the data on at least one code channel (CH1, CH2, CH3) to the terminal (100),

the terminal (100) is arranged to determine on the basis of said data at least the spreading code of at least one said code channel (CH1, CH2, CH3) and an estimate of the symbol timing of each code channel (CH1, CH2, CH3) in respect of the timing of the serving base station (102), and

on the basis of data on code channels the terminal (100) is arranged to utilize at least some of the code channels (CH1, CH2, CH3) of the neighbour base station (104, 106) to measure the signal timing of the neighbour base station (104, 106).

**14.** A radio system as claimed in claim 13, **characterized in that** the terminal (100) is arranged to utilize at least some of the predetermined symbol sequences (200) transmitted on the code channels (CH1, CH2, CH3) by the neighbour base station (104, 106) to measure the signal timing of the neighbour base station (104, 106).

**15.** A radio system as claimed in claim 13, **characterized in that** the base station (102) serving the terminal (100), a base station controller (108) or some other unit in the fixed network part is arranged to request data on the code channels of at least one neighbour base station (104, 106) via the fixed network part.

**16.** A radio system as claimed in claim 13, **characterized in that** the neighbour base station (104, 106) is arranged to select for data transmission code channels (CH1 to CH3) which have the highest transmission power in the direction of the base station (102) serving the terminal (100).

**17.** A radio system as claimed in claim 13, **characterized in that** the terminal (100) is arranged to utilize also the sync channel in measuring the timing.

**18.** A radio system as claimed in claim 13, **characterized in that** the terminal (100) is arranged to measure the signal timing from at least three base stations (102 to 106) to locate the terminal (100).

**19.** A radio system as claimed in claim 18, **characterized in that** the terminal (100) is arranged to transmit data on the signal timing of the signals of the base stations (102 to 106) to the fixed network part of the radio system to locate the terminal (100).

**20.** A radio system as claimed in claim 18, **characterized in that** the terminal (100) is arranged to determine its own location by means of the signal timing.

**21.** A radio system as claimed in claim 13, **characterized in that** the terminal (100) is arranged to measure the signal timing with some other base station (102 to 106), if the timing measurement fails with one base station (102 to 106).

**22.** A radio system as claimed in claim 13, **characterized in that** the neighbour base station (104, 106) is arranged to add to its transmission at least one code channel (CH1, CH2, CH3) comprising a known symbol sequence to measure the timing of the terminal (100), and the neighbour base station (104, 106) is arranged to convey via the serving base station (102) to the terminal (100) data the terminal (100) uses in measuring the timing of the code channel (CH1, CH2, CH3).

**23.** A radio system as claimed in claim 14, **characterized in that** the terminal is arranged to receive the predetermined symbols (200) on various code channels (CH1, CH2, CH3) of the same base station (102 to 106), the symbols being transmitted time-division multiplexed by the base station (102 to 106) on various channels (CH1 to CH3) in such a way that the predetermined symbols (200) of different code channels arrive at substantially different times.

**24.** A radio system as claimed in claim 14, **characterized in that** the terminal (100) is arranged to decode the received spreading coding of the signal of the code channel, to multiply the signal by the predetermined symbol sequence (200) to generate an estimate of the impulse response of the channel and to measure the timing of the received signal by coherently averaging the estimates of the impulse response.

## Patentansprüche

**1.** Signal-Timing-Messverfahren zur Verwendung im CDMA Funksystem mit zumindest drei Basisstationen (102 bis 106) und einem Endgerät (100), die ein Signal mit einem Spreizungscode multiplizieren, und wobei im Verfahren die Übertragung einer Basisstation verschiedene, durch unterschiedliche Spreizungscodes übertragene, Codekanäle (CH1 bis CH3) aufweist, wobei auf einem der Codekanäle eine vorbestimmte Symbolsequenz (200) übertragen wird, und im Verfahren das Endgerät (100) in Verbindung mit zumindest einer Basisstation (102) steht, deren Timing-Daten das Endgerät (100) speichert, **gekennzeichnet durch** Transportieren von Codekanaldaten zumindest eines Codekanals (CH1, CH2, CH3), die von zumindest einer benachbarten Basisstation (104, 106) zu einer bedienenden Basisstation (102) über den Festnetzteil übertragen wurden,

Übertragen der Codekanaldaten zumindest eines Codekanal (CH1, CH2, CH3) von der bedienenden Basisstation (102) an das Endgerät (100),

das Endgerät (100), das basierend auf diesen Daten den Spreizungscode zumindest eines Codekanals (CH1, CH2, CH3) und einen Schätzwert des Symbol-Timings jedes Codekanals (CH1, CH2, CH3) in Bezug auf das Timing der bedienenden Basisstation (102) bestimmt, und

das Endgerät (100), das basierend auf den Codekanaldaten zumindest einige der Codekanäle (CH1, CH2, CH3) der benachbarten Basisstation (104, 106) nutzt, um das Signal-Timing der benachbarten Basisstation (104,106)zu messen.

2. Verfahren nach Anspruch 1, **gekennzeichnet durch** das Endgerät (100), das zumindest einige der vorbestimmten, auf den Codekanälen (CH1, CH2, CH3) **durch** die benachbarten Basisstation (104, 106) übertragenen Symbolsequenzen (200) nutzt, um das Signal-Timing der benachbarten Basisstation (104, 106) zu messen.

3. Verfahren nach Anspruch 1, **gekennzeichnet durch** die das Endgerät (100), eine Basisstations-Steuereinrichtung (108) oder irgendeine weitere Einheit in dem Festnetz bedienende Basisstation (102), die Codekanaldaten zumindest einer benachbarten Basisstation (104, 106) über den Festnetzteil anfordert.

4. Verfahren nach Anspruch 1, **gekennzeichnet durch** die benachbarte Basisstation (104, 106), die für eine Datenübertragung Codekanäle (CH1 bis CH3) auswählt, welche die höchste Übertragungsleistung in die Richtung der das Endgerät (100) bedienenden Basisstation (102) aufweisen.

5. Verfahren nach Anspruch 1, **gekennzeichnet durch** das Messen des Timings, das auch den Sync-Kanal nutzt.

6. Verfahren nach Anspruch 1, **gekennzeichnet durch** das Endgerät (100), welches das Signal-Timing von zumindest drei Basisstationen (102 bis 106) misst, um den Aufenthaltsort des Endgeräts (100) zu bestimmen.

7. Verfahren nach Anspruch 6, **gekennzeichnet durch** das Endgerät (100), das Signal-Timing-Daten der Basisstationen an den Festnetzteil des Funksystems überträgt, um den Aufenthaltsort des Endgeräts (100) zu bestimmen.

8. Verfahren nach Anspruch 6, **gekennzeichnet durch** das Endgerät (100), das seinen eigenen Aufenthaltsort mittels des Signal-Timings bestimmt.

9. Verfahren nach Anspruch 1, **gekennzeichnet durch** das Endgerät (100), welches das Signal-Timing mit irgendeiner anderen benachbarten Basisstation (104, 106) misst, falls das Signal-Timing mit einer benachbarten Basisstation (104, 106) fehlschlägt.

10. Verfahren nach Anspruch 1, **gekennzeichnet durch** die benachbarte Basisstation (104, 106), die zu ihrer Übertragung zumindest einen Codekanal (CH1; CH2, CH3), auf welchem eine bekannte Symbolsequenz übertragen wird, hinzufügt, um das Signal-Timing des Endgeräts (100) zu messen, und **durch** die benachbarte Basisstation (104, 106), die über die bedienende Basisstation (102) an das Endgerät (100) Daten transportiert, auf denen basierend das Endgerät (100) den Codekanal (CH1; CH2, CH3) verwendet, um das Signal-Timing zu messen.

11. Verfahren nach Anspruch 2, **gekennzeichnet durch** das Endgerät (100), das vorbestimmte Signale (200) auf verschiedenen Codekanälen (CH1 bis CH3) der gleichen Basisstation (102 bis 106) empfängt, wobei die Symbole von der Basisstation (102 bis 106) auf verschiedenen Kanälen (CH1 bis CH3) derart zeitgeteilt gemultiplext übertragen werden, dass die vorbestimmten Symbole (200) der unterschiedlichen Codekanäle zu wesentlich unterschiedlichen Zeiten ankommen.

12. Verfahren nach Anspruch 2, **gekennzeichnet durch** das Endgerät (100), das die empfangene Spreizungskodierung des Signals des Codekanals decodiert, das Signal mit einer vorbestimmten Symbolsequenz (200) multipliziert, um einen Schätzwert der Impulsantwort des Kanals zu erzeugen, und das Timing des empfangenen Signals **durch** ein kohärentes Durchschnittsbilden der Schätzwerte misst.

13. Funksystem, welches ein CDMA Funksystem ist, mit zumindest drei Basisstationen (102 bis 104) und einem Endgerät (100), die eingerichtet sind, um ein Signal mit einem Spreizungscode zu multiplizieren, wobei im Funksystem die Übertragung einer Basisstation verschiedene mit unterschiedlichen Spreizungscodes übertragene Codekanäle (CH1 bis CH3) aufweist, wobei zumindest einer der Codekanäle eine vorbestimmte Symbolsequenz (200) aufweist, und das Endgerät (100) in Verbindung mit zumindest einer bedienenden Basisstation (102) steht, deren Timing-Daten das Endgerät (100) speichert, **dadurch gekennzeichnet,**

**dass** der Festnetzteil eingerichtet ist, Codekanaldaten über zumindest einen Codekanal (CH1, CH2, CH3) zu transportieren, die von zumindest einer benachbarten Basisstation (104, 106) zu einer bedienenden Basisstation (102) übertragen werden,

**dass** die bedienende Basisstation (102) eingerichtet ist, die Codekanaldaten zumindest eines Codekanals (CH1, CH2, CH3) an das Endgerät (100) zu übertragen,

**dass** das Endgerät (100) eingerichtet ist, basierend auf diesen Daten zumindest den Spreizungscode zumindest eines der Codekanäle (CH1, CH2, CH3) und einen Schätzwert des Symbol-Timings jedes Codekanals (CH1, CH2, CH3) in Bezug auf das Timing der bedienenden Basisstation (102) zu bestimmen, und

**dass** das Endgerät (100) basierend auf den Codekanaldaten eingerichtet ist, zumindest einige der Codekanäle (CH1, CH2, CH3) der benachbarten Basisstation (104, 106) zu nutzen, um das Signal-Timing der benachbarten Basisstation (104, 106) zu messen.

14. Funksystem nach Anspruch 13, **dadurch gekennzeichnet, dass** das Endgerät (100) eingerichtet ist, zumindest einige der vorbestimmten, auf den Codekanälen (CH1, CH2, CH3) der benachbarten Basisstation (104, 106) übertragenen Symbolsequenzen (200) zu nutzen, um das Signal-Timing der benachbarten Basisstation (104, 106) zu messen.

15. Funksystem nach Anspruch 13, **dadurch gekennzeichnet, dass** die das Endgerät (100), eine Basisstations-Steuereinrichtung (108) oder irgendeine weitere Einheit in dem Festnetz bedienende Basisstation (102) eingerichtet ist, Codekanaldaten zumindest einer benachbarten Basisstation (104, 106) über den Festnetzteil anzufordern.

16. Funksystem nach Anspruch 13, **dadurch gekennzeichnet, dass** die benachbarte Basisstation (104, 106) eingerichtet ist, für eine Datenübertragung Codekanäle (CH1 bis CH3) auszuwählen, welche die höchste Übertragungsleistung in die Richtung der das Endgerät (100) bedienenden Basisstation (102) aufweisen.

17. Funksystem nach Anspruch 13, **dadurch gekennzeichnet, dass** das Endgerät (100) eingerichtet ist, auch den Sync-Kanal beim Messen des Timings zu nutzen.

18. Funksystem nach Anspruch 13, **dadurch gekennzeichnet, dass** das Endgerät (100) eingerichtet ist, das Signal-Timing zumindest dreier Basisstationen (102 bis 106) zu messen, um den Aufenthaltsort des Endgeräts (100) zu bestimmen.

19. Funksystem nach Anspruch 18, **dadurch gekennzeichnet, dass** das Endgerät (100) eingerichtet ist, Signal-Timing-Daten der Signale der Basisstationen an den Festnetzteil des Funksystems zu übertragen, um den Aufenthaltsort des Endgeräts (100) zu bestimmen.

20. Funksystem nach Anspruch 18, **dadurch gekennzeichnet, dass** das Endgerät (100) eingerichtet ist, seinen eigenen Aufenthaltsort mittels des Signal-Timings zu bestimmen.

21. Funksystem nach Anspruch 13, **dadurch gekennzeichnet, dass** das Endgerät (100) eingerichtet ist, das Signal-Timing mit irgendeiner anderen Basisstation (102 bis 106) zu messen, falls das Timingmessen mit einer Basisstation (102 bis 106) fehlschlägt.

22. Funksystem nach Anspruch 13, **dadurch gekennzeichnet, dass** die benachbarte Basisstation (104, 106) eingerichtet ist, ihrer Übertragung zumindest einen Codekanal (CH1; CH2, CH3) mit einer bekannten Symbolsequenz hinzuzufügen, um das Timing des Endgeräts (100) zu messen, und die benachbarte Basisstation (104, 106) eingerichtet ist, über die bedienende Basisstation (102) an das Endgerät (100) Daten zu transportieren, die das Endgerät (100) beim Messen des Timings des Codekanals (CH1; CH2, CH3) verwendet.

23. Funksystem nach Anspruch 14, **dadurch gekennzeichnet, dass** das Endgerät eingerichtet ist, die vorbestimmten Signale (200) auf verschiedenen Codekanälen (CH1 bis CH3) der gleichen Basisstation (102 bis 106) zu empfangen, wobei die Symbole von der Basisstation (102 bis 106) auf verschiedenen Kanälen (CH1 bis CH3) derart zeitgeteilt gemultiplext übertragen werden, dass die vorbestimmten Symbole (200) der unterschiedlichen Codekanäle zu wesentlich unterschiedlichen Zeiten ankommen.

24. Funksystem nach Anspruch 14, **dadurch gekennzeichnet, dass** das Endgerät (100) eingerichtet ist, die empfangene Spreizungskodierung des Signals des Codekanals zu decodieren, das Signal mit der vorbestimmten Symbolsequenz (200) zu multiplizieren, um ein Schätzwert der Impulsantwort des Kanals zu erzeugen, und das Timing des empfangenen Signals durch ein kohärentes Durchschnittsbilden der Schätzwerte zu messen.

**Revendications**

1. Procédé permettant de mesurer une synchronisation de signal pouvant être utilisée dans le système radiofréquentiel d'accès multiple par différence de code CDMA comprenant au moins trois stations de base (102 à 106) et un terminal (100), qui multiplient un signal par un code d'étalement, procédé dans lequel, la transmission d'une station de base comprend divers canaux de code (CH1 à CH3) émis par différents codes d'étalement, canaux de code sur l'un desquels une séquence prédéterminée de symbole (200) est émise, procédé dans lequel le terminal (100) est en liaison avec au moins une station de base (102), sur une période dans laquelle le terminal (100) stocke des données, **caractérisé en ce qu'**il comprend les étapes consistant à

transporter des données sur au moins un canal de code (CH1, CH2, CH3) émis par au moins une station de base voisine (104, 106) à une station de base servante (102) par le biais de la partie fixe de réseau,

émettre les données sur au moins un canal de code (CH1, CH2, CH3) à partir de la station de base servante (102) au terminal (100),

le terminal (100) déterminant sur la base desdites données le code d'étalement d'au moins un canal de code (CH1, CH2, CH3) et une évaluation de la synchronisation de symbole de chaque canal de code (CH1, CH2, CH3) en ce qui concerne la synchronisation de la station de base servante (102), et

le terminal (100) utilisant sur la base de ces données sur des canaux de code au moins certains des canaux de code (CH1, CH2, CH3) de la station de base voisine (104, 106) pour mesurer la synchronisation de signal de la station de base voisine (104, 106).

2. Procédé selon la revendication 1, **caractérisé en ce que** le terminal (100) utilise au moins certaines des séquences prédéterminées de symbole (200) émises sur les canaux de code (CH1, CH2, CH3) par la station de base voisine (104, 106) pour mesurer la synchronisation de signal de la station de base voisine (104, 106).

3. Procédé selon la revendication 1, **caractérisé en ce que** la station de base (102) sert le terminal (100), un contrôleur de station de base (108) ou une certaine autre unité dans le réseau fixe demandant des données sur les canaux de code d'au moins une station de base voisine (104, 106) par le biais de la partie fixe de réseau.

4. Procédé selon la revendication 1, **caractérisé en ce que** la station de base voisine (104, 106) choisit des canaux de code de transmission de données (CH1 à CH3) qui ont la puissance d'émission la plus élevée dans la direction de la station de base (102) servant le terminal (100).

5. Procédé selon la revendication 1, **caractérisé en ce que** la mesure de synchronisation utilise également le canal de synchronisation.

6. Procédé selon la revendication 1, **caractérisé en ce que** le terminal (100) mesure la synchronisation de signal à partir d'au moins trois stations de base (102 à 106) pour localiser le terminal (100).

7. Procédé selon la revendication 6, **caractérisé en ce que** le terminal (100) émet des données relatives à la synchronisation de signal des stations de base à la partie du réseau fixée du système radiofréquentiel pour localiser le terminal (100).

8. Procédé selon la revendication 6, **caractérisé en ce que** le terminal (100) détermine son propre emplacement grâce à la synchronisation de signal.

9. Procédé selon la revendication 1, **caractérisé en ce que** le terminal (100) mesure la synchronisation de signal avec une autre station de base voisine (104, 106), si la synchronisation de signal échoue avec une station de base voisine (104, 106).

10. Procédé selon la revendication 1, **caractérisé en ce que** la station de base voisine (104, 106) ajoute à sa transmission au moins un canal de codes (CH1, CH2, CH3) sur lequel une séquence connue de symboles est émise afin de mesurer la synchronisation de signal du terminal (100), et **en ce que** la station de base voisine (104, 106) transporte au terminal (100) par le biais de la station de base servante (102), des données, sur la base desquelles le terminal (100) utilise ledit canal de code (CH1, CH2, CH3) pour mesurer la synchronisation de signal.

11. Procédé selon la revendication 2, **caractérisé en ce que** le terminal (100) reçoit des symboles prédéterminés (200) sur plusieurs canaux de code (CH1 à CH3) de la même station de base (102 à 106), les symboles étant émis multiplexés par division de temps par la station de base (102 à 106) sur plusieurs canaux (CH1 à CH3) de telle manière que les symboles prédéterminés (200) de différents canaux de code arrivent à des instants essentiellement différents.

12. Procédé selon la revendication 2, **caractérisé en ce que** le terminal (100) décode le codage de propagation reçu du signal du canal de code, multiplie le signal par une séquence prédéterminée de symbole (200) pour générer une évaluation de la réponse impulsionnelle du canal et en mesurant la synchronisation du signal reçu en faisant la moyenne des évaluations de la réponse impulsionnelle.

13. Système radio, qui est un système radiofréquentiel d'accès multiple par différence de code CDMA, comprenant au moins trois stations de base (102 à 104) et un terminal (100) qui sont prévus pour multiplier un signal par un code d'étalement, système radio dans lequel la transmission d'une station de base comprend les divers canaux de code (CH1 à CH3) émis par différents codes d'étalement, système radio dans lequel au moins un des canaux de code comprend une séquence prédéterminée de symbole (200), et le terminal (100) est en liaison avec au moins une station de base servante (102), sur la synchronisation de laquelle le terminal (100) stocke des données, **caractérisé en ce que**
la partie fixe de réseau est prévue pour transporter des données sur au moins un canal de code (CH1, CH2, CH3) émis par au moins une station de base voisine (104, 106) à la station de base servante (102),
la station de base servante (102) est prévue pour émettre des données sur au moins un canal de code (CH1, CH2, CH3) au terminal (100),
le terminal (100) est prévu pour déterminer sur la base desdites données au moins le code d'étalement d'au moins ledit canal de code (CH1, CH2, CH3) et une évaluation de la synchronisation de symbole de chaque canal de code (CH1, CH2, CH3) pour ce qui concerne la synchronisation de la station de base servante (102), et **en ce que**
sur la base de données relatives à des canaux de code le terminal (100) est prévu pour utiliser au moins certain des canaux de code (CH1, CH2, CH3) de la station de base voisine (104, 106) pour mesurer la synchronisation de signal de la station de base voisine (104, 106).

14. Système radio selon la revendication 13, **caractérisé en ce que** le terminal (100) est prévu pour utiliser au moins certaines des séquences prédéterminées de symbole (200) émises sur les canaux de code (CH1, CH2, CH3) par la station de base voisine (104, 106) pour mesurer la synchronisation de signal de la station de base voisine (104, 106).

15. Système radio selon la revendication 13, **caractérisé en ce que** la station de base (102) servant le terminal (100), un contrôleur de station de base (108) ou une autre unité dans la partie fixe du réseau est prévue pour demander des données sur les canaux d'au moins une station de base voisine (104, 106) par le biais de la partie fixe de réseau.

16. Système radio selon la revendication 13, **caractérisé en ce que** la station de base voisine (104, 106) est prévue pour sélectionner des cannaux de code de transmission de données (CH1 à CH3) qui ont la puissance d'émission la plus élevée dans la direction de la station de base (102) servant le terminal (100).

17. Système radio selon la revendication 13, **caractérisé en ce que** le terminal (100) est prévu pour utiliser également le canal de synchronisation en mesurant la synchronisation.

18. Système radio selon la revendication 13, **caractérisé en ce que** le terminal (100) est prévu pour mesurer la synchronisation de signal à partir d'au moins trois stations de base (102 à 106) pour localiser le terminal (100).

19. Système radio selon la revendication 18, **caractérisé en ce que** le terminal (100) est prévu pour émettre des données relatives à la synchronisation de signal des signaux des stations de base (102 à 106) à la partie fixe de réseau du système radiofréquentiel pour localiser le terminal (100).

20. Système radio selon la revendication 18, **caractérisé en ce que** le terminal (100) est prévu pour déterminer son propre emplacement grâce à la synchronisation de signal.

**21.** Système radio selon la revendication 13, **caractérisé en ce que** le terminal (100) est prévu pour mesurer la synchronisation de signal avec une ou plusieurs stations de base (102 à 106), si la mesure de synchronisation échoue avec une station de base (102 à 106).

**22.** Système radio selon la revendication 13, **caractérisé en ce que** la station de base voisine (104, 106) est prévue pour ajouter à sa transmission au moins un canal de code (CH1, CH2, CH3) comprenant une séquence connue de symbole pour mesurer la synchronisation du terminal (100), et **en ce que** la station de base voisine (104, 106) est prévue pour transporter par le biais de la station de base servante (102) au terminal (100) des données que le terminal (100) utilise en mesurant la synchronisation du canal de code (CH1, CH2, CH3).

**23.** Système radio selon la revendication 14, **caractérisé en ce que** le terminal est prévu pour recevoir les symboles prédéterminés (200) sur divers canaux de code (CH1, CH2, CH3) de la même station de base (102 à 106), les symboles étant émis multiplexés par division de temps par la station de base (102 à 106) sur les divers canaux (CH1 à CH3) de telle manière que les symboles prédéterminés (200) de différents canaux de code arrivent à des instants essentiellement différents.

**24.** Système radio selon la revendication 14, **caractérisé en ce que** le terminal (100) est prévu pour décoder le codage d'étalement reçu du signal du canal de code, pour multiplier le signal par la séquence prédéterminée de symbole (200) pour générer une évaluation de la réponse impulsionnelle du canal et pour mesurer la synchronisation du signal reçu en faisant la moyenne avec cohérence des évaluations de la réponse impulsionnelle.

FIG. 1

FIG. 2

FIG. 3

FIG. 4